# EUROPEAN PATENT SPECIFICATION

(11) **EP 3 634 185 B1**
(45) Date of publication and mention of the grant of the patent: **25.10.2023**
(21) Application number: 18730128.8
(22) Date of filing: 28.05.2018
(51) Int. Cl.: F24H 9/1818, H05B 3/42, H05B 3/06

(54) **FLUID HEATER AND CORRESPONDING MACHINE**
FLUIDWÄRMER UND ENTSPRECHENDE MASCHINE
DISPOSITIF DE CHAUFFAGE DE FLUIDE ET MACHINE CORRESPONDANTE

(30) Priority: 05.06.2017 IT 201700060931
(43) Date of publication of application: 15.04.2020
(73) Proprietor: Luigi Lavazza S.p.A., 10152 Torino (IT)
(72) Inventor: DE MANGO, Carlo, I-10095 Grugliasco (Torino) (IT)
(74) Representative: Bosotti, Luciano
(86) International application number: PCT/IB2018/053780
(87) International publication number: WO 2018/224909

(56) References cited:
- EP-A2- 2 112 438
- WO-A1-2013/019094
- US-A- 1 670 032
- US-A1- 2017 074 545

## Description

### Technical field

The present disclosure relates to heaters for fluids.

One or more embodiments may be used, for example, for the production of hot water and/or steam.

One or more embodiments may be used, for example, in machines for preparing beverages such as coffee, for example, espresso coffee.

### Technological background

The sector of heaters for fluids (liquids and aeriforms) constitutes a sector of the art that is extremely extensive.

Heaters of this type may be used, for example, for the production of hot water and/or steam in various types of electrical household appliances. Machines for the production of beverages such as coffee constitute an example of this possible application.

In such a context of application, it is desirable to provide improved solutions that are able to combine characteristics of simplicity (and hence of contained overall dimensions and cost) to features of reliability and efficiency, with consequent reduction in consumption levels.

More specifically, the invention relates to a fluid heater according to the preamble of claim 1, which is known, e.g. from WO 2013/019094 A1. Also US 2017/074545 A1, EP 2 112 438 A2 and US 1 670 032 A are of some interest for the invention.

### Object and summary

The object of one or more embodiments is to contribute to the development of solutions of the above nature.

According to one or more embodiments, the above object is achieved thanks to a fluid heater having the characteristics recalled in claim 1.

One or more embodiments may regard a corresponding machine such as a machine for preparing beverages as per claim 12.

The claims form an integral part of the technical teachings provided herein in relation to the embodiments.

One or more embodiments provide an electrical fluid heater including a body made of thermally conductive material, englobed in which is at least one heating resistor with a conduit for passage of water that follows a pre-set path, close to the heating element, with the possible provision of spacers/centring elements such as to facilitate mechanical anchorage and centring between the conduit and the heating core.

In one or more embodiments, a body made of thermally conductive material that englobes the elements indicated above may leave exposed the power-supply terminals of the heating element and the terminals of the conduit that is to be traversed by the fluid undergoing heating (e.g., water that is to be heated and possibly converted at least in part into steam).

In one or more embodiments, the winding path of the conduit may be shaped so as to optimize the distance between the conduit and the heating core, for example, maintaining a pre-set and practically constant distance throughout the development in length of the winding of the conduit.

In one or more embodiments, the winding may resemble the shape of an hourglass or a figure eight or an infinity sign with helical development in height.

In one or more embodiments, it is possible to envisage a geometry that broadly speaking is similar to the one obtained by two helical springs set alongside one another inside which there can be positioned a fork-like heating core (for example, U-shaped) with the heating elements that correspond to the prongs of the aforesaid fork-like shape inserted in the two branches of the hourglass-shaped or eight-shaped winding thus formed.

In one or more embodiments, it is possible for the distance between the turns or loops of the conduit and the heating elements to be practically constant throughout the development of the conduit, thus facilitating a homogeneous transfer of heat between the heating core and the conduit that absorbs the heat.

In one or more embodiments, the conduit can be shaped using mechanical equipment of the same type as the one used for producing springs, with the possibility of varying the number of turns or loops without having to make appreciable modifications on the above equipment, but merely setting a different number of turns or loops of the winding.

One or more embodiments hence make it possible to provide different versions of heating device without this entailing radical modifications on the production process.

One or more embodiments are suited to being used employing materials chosen with thermal properties different from one another, it thus being possible, for example, to envisage different (shorter or longer) times for reaching a desired heating temperature, for example as a function of the power of the heating core and of the mass of the body that englobes the elements of the heater (for example, the conduit and the heating core).

One or more embodiments may use spacers/centring elements that can be inserted in the turns of the winding of the conduit with a given orientation such as to enable insertion thereof without being hindered by the conduit. Once the spacers/centring elements have been inserted into the conduit, via an angular rotation they can reach a condition of anchorage to the turns or loops of the conduit, enabling subsequent centring of the heating element with respect to the conduit.

In one or more embodiments, the above spacers/centring elements may enable a (slight) interference with the heating core so as to contribute to proper positioning of the internal elements, for example, during subsequent co-moulding of a thermally conductive material.

In one or more embodiments, the spacers/centring elements may be made of a metal material or of a plastic material with good characteristics of transmission of heat.

### Brief description of the annexed drawings

One or more embodiments will now be described, purely by way of non-limiting example, with reference to the annexed drawings, wherein:
- Figure 1 illustrates possible modes of use and of characteristics of embodiments;
- Figure 2 illustrates a fluid heater according to one or more embodiments illustrated in exploded perspective view and with some parts removed for clarity of illustration; and
- Figure 3 illustrates the elements presented in Figure 2 illustrated in an assembled condition.

It will be appreciated that, for clarity and simplicity of illustration, the various views of the figures may not be in the same scale.

### Detailed description

In the ensuing description, various specific details are illustrated aimed at providing an in-depth understanding of various examples of embodiments. The embodiments may be obtained without one or more of the specific details, or with other methods, components, materials, etc. In other cases, known structures, materials, or operations are not illustrated or described in detail so that the various aspects of the embodiments will not be obscured.

Reference to "an embodiment" or "one embodiment" in the framework of the present description is meant to indicate that a particular configuration, structure, or characteristic described in relation to the embodiment is included in at least one embodiment. Consequently, phrases such as "in an embodiment", "in one embodiment", or the like, that may be present in various points of the present description do not necessarily refer exactly to one and the same embodiment. Moreover, particular conformations, structures, or characteristics may be combined in any adequate way in one or more embodiments.

The references used herein are provided merely for convenience and hence do not define the sphere of protection or the scope of the embodiments.

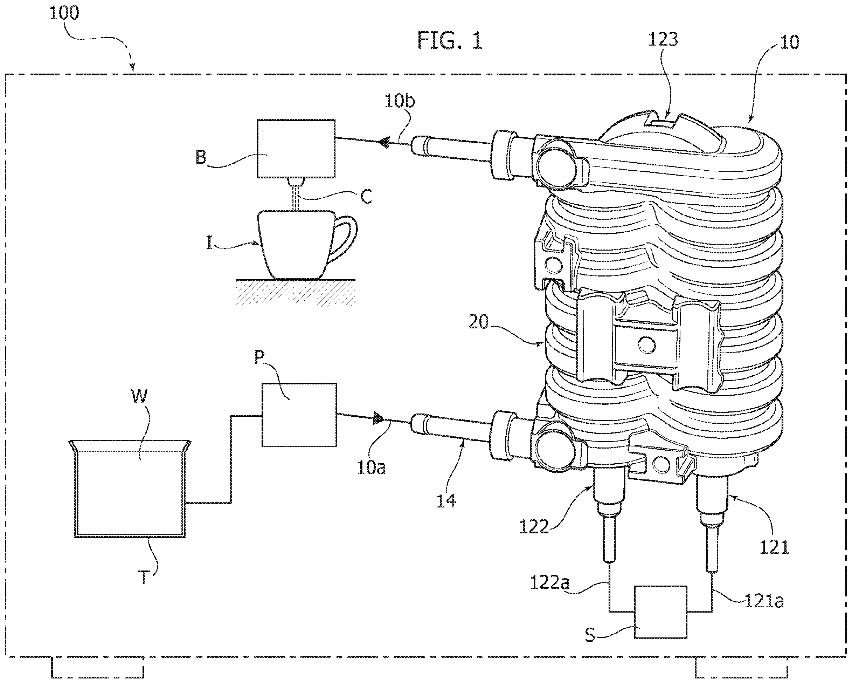

In Figure 1 the reference number 100 designates as a whole a machine, which may include a fluid heater designated as a whole by 10.

Figure 1 regards, purely by way of example, a machine for preparing beverages such as coffee, for example, espresso coffee.

Reference to this possible context of use is provided merely by way of non-limiting example of the embodiments. One or more embodiments may in fact find application in a wide range of contexts of application in which heating of a fluid (liquid and/or aeriform) is envisaged.

In the case, exemplified herein, of a machine for preparing beverages such as coffee (or beverages of some other type such as tea, hot chocolate, broth, etc.), water W taken in from a tank T is supplied via a pump P to an inlet end 10a of the heater 10. In the case exemplified herein, the heater 10 is an electrically supplied heater, which can be supplied via an electrical-supply source S. In the case exemplified herein, the heated fluid (hot water and/or steam) produced via the heater 10 is made available to an outlet 10b of the heater 10 itself and supplied to a brewing section B. Here the fluid is made to pass through a mass of beverage-precursor substance (for example, ground coffee) so as to produce a beverage (for example, espresso coffee C) that is collected in a container I, for example a cup.

Machines for preparing beverages of this type are in themselves known in the art, which renders superfluous any description in further detail herein.

For the rest, it is recalled once again that reference to a machine for preparing beverages as possible context of use of one or more embodiments is provided purely by way of non-limiting example of the embodiments.

This applies, for example (but not exclusively) to reference to the heater 10 as "fluid heater". This reference is meant to highlight the fact that a heater according to one or more embodiments can be used both for heating liquids (for example, water) and for heating aeriforms (for example, air or steam), as well as for heating fluids in a mixed phase (e.g., water and steam). For example, possible applications of a heater 10 according to one or more embodiments may include electrical household appliances other than machines for preparing beverages, such as steam cleaners, steam ovens, hair-driers, air-blade hand-driers, etc.

In one or more embodiments, a fluid heater 10 as illustrated in the figures may include a heating core 12 having a fork-like general conformation with two prongs 121 and 122 connected by an arched C-shaped portion 123, with the two prongs 121 and 122 that define a first heating element and a second heating element that are co-extensive (parallel to one another).

Fork-like heating cores such as the core 12 exemplified herein can be electrically supplied through corresponding terminals 121a, 122a starting from an electrical-supply source such as the source S illustrated in Figure 1. Fork-like heating cores of this type are known, for example, for use in washing machines.

In one or more embodiments, the heater 10 may include a conduit 14 (e.g., a tube made of thermally conductive material, such as a metal material) which can be traversed by the fluid undergoing heating, which is introduced into the conduit 14 from an inlet connector 10a, the heated fluid coming out of an outlet connector 10b.

In one or more embodiments, the conduit 14 may be wound around the heating core 12 in a winding configuration including a first set and a second set of winding loops (turns), designated, respectively, by 141 and 142.

The loops or turns of the first set ("first loops") 141 are wound around the first heating element 121, whereas the loops or turns of the second set ("second loops") 142 are wound around the second heating element 122.

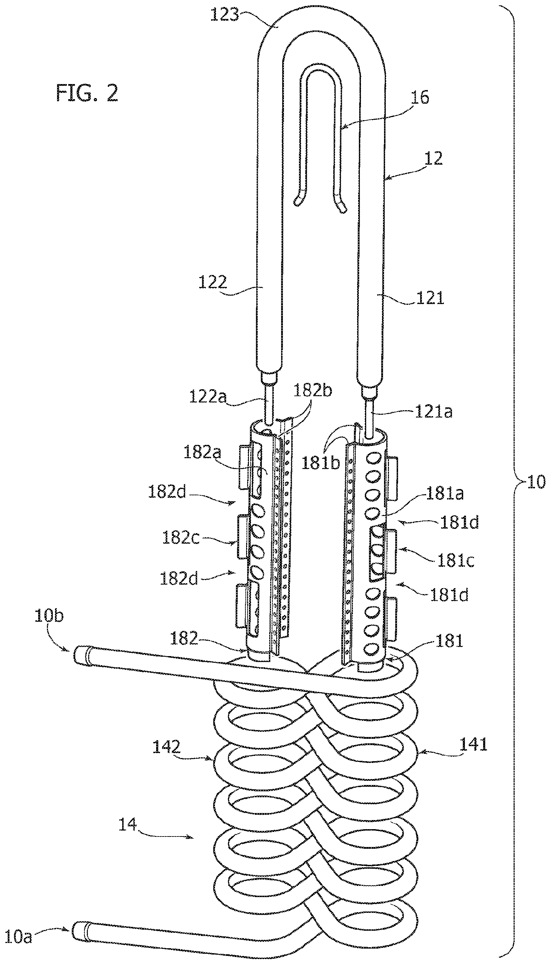

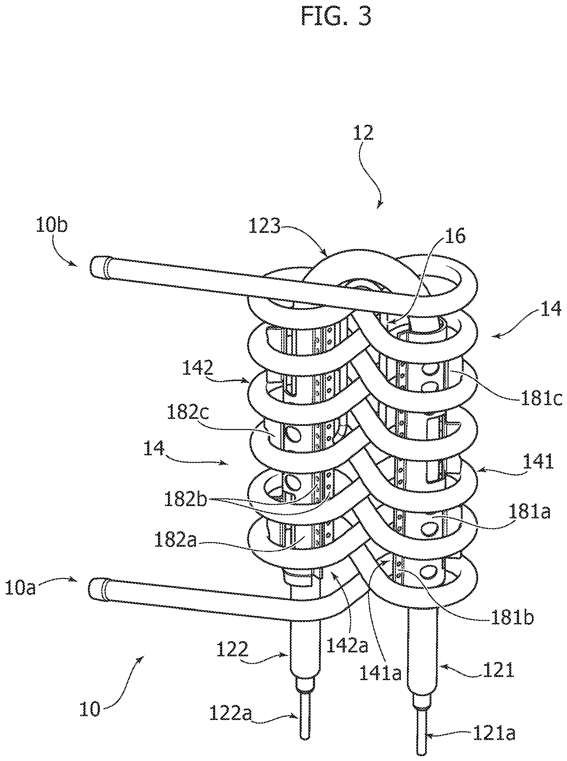

As may be appreciated, for example, from Figures 2 and 3, the winding path of the conduit 14 around the heating core 12 may envisage that the first loops 141 are interleaved with the second loops 142.

For example (see, for instance, the bottom part of Figure 2), in one or more embodiments, it is possible to envisage, starting from the inlet end 10a of the conduit 14, the presence, in sequence, of:
- a loop of the first set 141 wound (in a first direction, for example, in a clockwise direction) around the first heating element 121;
- a loop of the second set 142 wound (in a direction opposite to the first, for example, in a counterclockwise direction) around the second heating element 122;
- another loop of the first set 141 once again wound in the first direction around the first heating element 121;
- another loop of the second set 142 once again wound in the second direction around the second heating element 122;
and so on, until an axial development is obtained for the winding of the conduit 14 that can be determined according to the requirements of application and use.

In one or more embodiments, the path of winding of the conduit 14 around the two elements 121 and 122 of the heating core 12 observed in cross section with respect to the direction of longitudinal extension of the winding as a whole, can be viewed as having a shape that can be defined as the shape of an hourglass or of a figure eight (or of the infinity sign).

In one or more embodiments, an action of winding (shaping) of the conduit 14 according to the criteria outlined above may be made by resorting to methods and equipment of the type commonly used for producing springs such as helical springs starting from metal wires or tubes.

It will moreover be appreciated that the winding path exemplified herein is suited to being made so as to include virtually any number of winding loops or turns both in the first set 141 and in the second set 142.

In one or more embodiments, the heater 10 is hence suited to being produced in a wide range of possible sizes (determined by the length of the winding elements 121, 122 and by the corresponding number of loops or turns of the conduit 14 wound around them) according to the requirements of application and use (required heating power, dimensions of the corresponding housings, etc.).

In one or more embodiments, the winding criterion exemplified herein (interleaving of the winding loops or turns of the two sets 141, 142) may be applied also in ways different from the one exemplified herein, which envisages alternation of individual loops or turns of the first set 141 with individual loops or turns of the second set 142.

For example, one or more embodiments may envisage an interleaving criterion with pairs of loops or turns of the first set 141 that alternate with pairs of loops or turns of the second set 142.

It is also possible to modify the above interleaving criterion by envisaging winding criteria that are at least locally asymmetrical, where, for example, one turn of the first set 141 is followed by two turns of the second set 142, and so on.

Whatever the criteria adopted in implementing the above general interleaving principle, one or more embodiments facilitate a good thermal coupling between the heating core 12 and the conduit 14, for example, with the possibility (as may be appreciated, for instance, from the top part of Figure 3) of providing winding loops or turns of the conduit 14 in (strict) proximity of the C-shaped portion 123 of the heating core 12.

For example, a relative positioning determined in a precise way can be facilitated by providing a spacer element 16 such as a fork-like element set between the heating core 12 and the winding arrangement of the conduit 14.

Once again in order to facilitate a precise relative positioning of the winding of the conduit 14 on the heating core 12, in one or more embodiments it is possible to insert between each heating element 121, 122 and the respective set of loops or turns 141, 142 centring elements 181, 182.

The above elements can facilitate precise relative positioning of the conduit 14 and of the heating core 12 both in a radial direction (for example, with the heating elements 121, 122 set in a position that is as far as possible central with respect to the respective sets of loops or turns 141, 142 wound around them) and in the longitudinal direction (for example, even in the case where the spacer element 16 is not provided).

In one or more embodiments, the centring elements 181, 182 may include a channel body 181a, 182a, which may be fitted, possibly by snap action, on the heating elements 121, 122 (in practice embracing them) with the provision of one or more longitudinal fins that extend radially on the outside of the aforesaid channel-shaped body.

In one or more embodiments, there may be provided three fins of this type designated, respectively, by 181b, 181c (heating element 121, set of turns or loops 141) and by 182b, 182c (heating element 122, set of turns or loops 142), possibly spaced at the same angular distance apart (for example, 120°) about the longitudinal axis of the centring element.

In one or more embodiments, the above set of fins may include end fins of the channel-shaped body (the ones designated by 181b and 182b) and a dorsal fin (181c, 182c), it being possible for the latter to be more pronounced and to present notches (181d, 182d) forming passageways for the loops or turns of the winding of the conduit 14 so as to facilitate precise relative longitudinal positioning of the windings of loops or turns 141, 142 with respect to the heating elements 121, 122.

In one or more embodiments, the configuration of centring elements exemplified herein (in particular as regards the dorsal fin 181c, 182c) can exploit the fact that - as may be appreciated, for example, from the bottom part of Figure 2 - the overall hourglass conformation of the winding including the two sets of loops or turns 141, 142 determines, within each of these sets of loops or turns, the formation of mutually facing regions with a cusp-shaped profile 141a, 142a (these are in practice the two portions adjacent to the necking area or narrowing of the hourglass shape).

The presence of the cusp-shaped regions 141a, 142a enables longitudinal relative sliding of the centring elements 181, 182 with respect to the winding of the conduit 141 obtained by bringing the aforesaid dorsal fins 181c, 182c into a position corresponding to the aforesaid cusp-shaped regions, it being thus possible to enable practically free sliding of the centring elements 181, 182 with respect to the winding of the conduit 14.

Reference to longitudinal - relative - sliding is linked to the fact that, according to the possible modalities adopted for assembly of the device 12, it is possible to envisage both that the centring elements 181, 182 are made to slide within the winding 141, 142, and, in a complementary way, that the winding 141, 142 is made to slide on the centring elements 181, 182 for example already mounted on the heating elements 121, 122.

Once the desired axial positioning of the winding 141, 142 with respect to the centring elements 181, 182 has been reached, it is possible to rotate the centring elements 181, 182 with respect to their longitudinal axes so as to be able to bring the notches 181d, 182d to embrace corresponding loops or turns of the windings 141, 142, thus facilitating precise relative positioning of the winding 141, 142 of the conduit 14 with respect to the heating core 12.

In one or more embodiments (see for example Figure 1), the set of parts previously described can be encapsulated in a thermally conductive material 20 (for example, a metal material such as an aluminium alloy) poured/moulded around the aforesaid set of parts, for example, leaving accessible from the outside both the electrical-supply terminals 121a, 122a of the heating core 12 and the end connectors 10a (intake) and 10b (delivery) of the conduit 14.

In one or more embodiments, it is possible to get the thermally conductive material 20 to fill the spaces between the heating elements 12 and the turns or loops 141, 142 of the conduit 14, thus facilitating setting-up of good conditions of heat transfer from the heating core 12 to the conduit 14 and to the fluid (liquid or aeriform) heated by passage through the conduit 14 itself.

In one or more embodiments, the solution exemplified herein with reference to a fork-like heating core 12 including two co-extensive heating elements 121, 122 may be extended to structures of heating core 12 that include three or more co-extensive (parallel) heating elements, accordingly adapting the winding path of the conduit 14 so as to include a corresponding number (three or more) of sets of winding loops or turns of the conduit 14. The language of the claims (e.g., "including") is hence understood as extending also to these possible developments.

In one or more embodiments, a fluid heater (e.g., 10) may include:
- a heating core (e.g., 12) including a first elongated heating element (e.g., 121) and a second elongated heating element (e.g., 122), which are co-extensive (e.g., parallel to one another);
- a conduit (e.g., 14) with an inlet end (e.g., 10a) for fluid to be heated (e.g., water) and an outlet end (e.g., 10b) for heated fluid (e.g., water and/or steam), the conduit being wound around the heating elements in a winding pattern including a set of first winding loops (e.g., 141) wound around the first heating element and a set of second winding loops (e.g., 142) wound around the second heating element, the first winding loops being interleaved with the second winding loops.

In one or more embodiments:
- the first winding loops may be wound around the first heating element in a first winding direction; and
- the second winding loops may be wound around the second heating element in a second winding direction, the second winding direction being opposite to the first winding direction.

In one or more embodiments, the second winding direction could be the same as (concordant with) the first winding direction.

In one or more embodiments, the conduit may be wound around the first and second heating elements with an hourglass winding path.

One or more embodiments may include a fork-like heating core with two prongs that constitute the first and second heating elements and a C-shaped part (e.g., 123) between the two prongs.

One or more embodiments may include a spacer element (e.g., 16) between the C-shaped portion of the heating core and the sets of winding loops of the conduit.

One or more embodiments according to the invention include centering elements (e.g., 181, 182) provided between the first winding loops and the first heating element and between the second winding loops and the second heating element.

In one or more embodiments, the centring elements may include at least one channel-shaped body (e.g., 181a, 182a) that embraces a respective one of the first and second heating elements and at least one longitudinal fin (e.g., 181b, 181c, 182b, 182c) that projects radially towards the outside of the channel-shaped body.

In one or more embodiments, the set of the first winding loops and the set of the second winding loops may include mutually facing cusp-shaped regions (e.g., 141a, 142a), with the at least one longitudinal fin (e.g., 181c, 182c) that can be inserted longitudinally in said cusp-shaped regions.

In one or more embodiments, the at least one longitudinal fin (e.g., 181c, 182c) may include a set of notches (e.g., 181d, 182d) that provide passageways for the winding loops of the conduit.

One or more embodiments may include thermally conductive material (e.g., 20) applied (e.g., moulded/poured) on the heating elements and on the winding loops of the conduit wound around the heating elements.

In one or more embodiments, the thermally conductive material may fill the space between the heating elements and the winding loops of the conduit wound around the heating elements.

In one or more embodiments, a machine (e.g., an electrical household appliance 100) may include:
- a fluid heater according to one or more embodiments;
- a source (e.g., P, T, W) of liquid in communication of transfer of liquid (e.g., water) with the inlet end of the conduit of the fluid heater;
- a power-supply source (e.g., an electrical-supply source S) for activating the heating core of the fluid heater; and
- a member (e.g., B) that uses heated fluid (e.g., water and/or steam), in communication of transfer of fluid (e.g., water and/or steam) with the outlet end of the conduit of the fluid heater.

In one or more embodiments, a machine (for example, for preparing beverages) may include:
- a source (e.g., P, T, W) of liquid for preparing beverages in communication of liquid transfer with the inlet end of the conduit of the fluid heater; and
- a brewing chamber (e.g., B), which can be loaded with a precursor of a beverage (e.g., ground coffee, tea, etc.), the brewing chamber being in communication of transfer of fluid (e.g., water and/or steam) with the outlet end of the conduit of the fluid heater and being configured for delivering beverages (e.g., C) obtained by brewing said precursor via fluid heated by the fluid heater.

Without prejudice to the underlying principles, the details of construction and the embodiments may vary, even significantly, with respect to what is illustrated herein purely by way of non-limiting example, without thereby departing from the sphere of protection, which is defined by the annexed claims.

## Claims

1. A fluid heater (10), including:
- a heater core (12) including first (121) and second (122) elongate co-extensive heater members,
- a conduit (14) with an input end (10a) for fluid to be heated and an output end (10b) for heated fluid, the conduit (14) wound onto the heater members (121, 122) in a winding pattern including a set of first winding loops (141) wound around the first heater member (121) and a set of second winding loops (142) wound around the second heater member (122), the first winding loops (141) interleaved with the second winding loops (142),
**characterised in that** the fluid heater (10) includes centering members (181, 182) between the first winding loops (141) and the first heater member (121) and between the second winding loops (142) and the second heater member (122).

2. The fluid heater (10) of claim 1, wherein:
- the first winding loops (141) are wound on the first heater member (121) in a first winding direction, and
- the second winding loops (142) are wound on the second heater member (122) in a second winding direction, the second winding direction opposite to the first winding direction.

3. The fluid heater (10) of claim 1 or claim 2, wherein the conduit (14) is wound onto the first (121) and the second (122) heater members in an hourglass-shaped winding trajectory.

4. The fluid heater (10) of any of the previous claims, including a fork-shaped heater core (12) with two prongs providing the first (121) and second (122) heater members and a loop portion (123) between the prongs (121, 122).

5. The fluid heater (10) of claim 4, including a spacer member (16) between the loop portion (123) of the heater core (12) and the sets of winding loops (141, 142) of the conduit (14).

6. The fluid heater (10) of claim 1, wherein the centering members (181, 182) include at least one channel-shaped body (181a, 182a) embracing a respective one of the first (121) and the second (122) heater members and at least one longitudinal fin (181b, 181c; 182b, 182c) protruding radially outwardly of the channel-shaped body (181a, 182a).

7. The fluid heater (10) of claim 6, wherein the set of first winding loops (141) and the set of second winding loops (142) include mutually facing cusp-shaped regions (141a, 142a) with the at least one (181c, 182c) longitudinal fin insertable longitudinally into said cusp-shaped regions (141a, 142a).

8. The fluid heater (10) of claim 6 or claim 7, wherein the least one longitudinal fin (181c, 182c) includes a set of notches (181d, 182d) providing passageways for the winding loops (141, 142) of the conduit (14).

9. The fluid heater (10) of any of the previous claims, including heat-conductive material (20) applied onto the heater members (121, 122) and the winding loops (141, 142) of the conduit (14) wound onto the heater members (122, 122).

10. The fluid heater (10) of claim 9, wherein the heat-conductive material (20) fills the space between the heater members (121, 122) and winding loops (141, 142) of the conduit (14) wound onto the heater members (121, 122).

11. A machine (100), including:
- a fluid heater (10) according to any one of the preceding claims,
- a liquid source (P, T, W) in liquid transfer communication with the input end (10a) of the conduit (14) of the fluid heater (10),
- a power supply source (S) for energizing the heater core (12) of the fluid heater (10), and
- a user member (B) of heated fluid in fluid transfer communication with the output end (10b) of the conduit (14) of the fluid heater (10).

12. A machine (100) according to claim 11, including:
- a source (P, T, W) of liquid for preparing beverages in liquid transfer communication with the input end (10a) of the conduit (14) of the fluid heater (10),
- a brewing chamber (B) loadable with a beverage precursor, the brewing chamber in fluid transfer communication with the output end (10b) of the conduit (14) of the fluid heater (10) and configured for dispensing beverages (C) obtained by brewing said precursor by means of heated fluid from the fluid heater (10).

## Patentansprüche

1. Fluidwärmer (10), der Folgendes beinhaltet:
- einen Heizkern (12), der ein erstes (121) und ein zweites (122) längliches, sich gemeinsam erstreckendes Heizelement beinhaltet,
- eine Leitung (14) mit einem Eingangsende (10a) für zu erwärmendes Fluid und einem Ausgangsende (10b) für erwärmtes Fluid, wobei die Leitung (14) um die Heizelemente (121, 122) in einem Wickelmuster gewickelt ist, das einen Satz erster Wickelschleifen (141) beinhaltet, die um das erste Heizelement (121) gewickelt sind, und einen Satz zweiter Wickelschleifen (142), die um das zweite Heizelement (122) gewickelt sind, wobei die ersten Wickelschleifen (141) mit den zweiten Wickelschleifen (142) verschachtelt sind,
**dadurch gekennzeichnet, dass** der Fluidwärmer (10) Zentrierelemente (181, 182) zwischen den ersten Wickelschleifen (141) und dem ersten Heizelement (121) und zwischen den zweiten Wickelschleifen (142) und dem zweiten Heizelelement (122) beinhaltet.

2. Fluidwärmer (10) nach Anspruch 1, wobei:
- die ersten Wickelschleifen (141) auf dem ersten Heizelement (121) in einer ersten Wickelrichtung aufgewickelt sind, und
- die zweiten Wickelschleifen (142) auf dem zweiten Heizelement (122) in einer zweiten Wickelrichtung aufgewickelt sind, wobei die zweite Wickelrichtung der ersten Wickelrichtung entgegengesetzt ist.

3. Fluidwärmer (10) nach Anspruch 1 oder Anspruch 2, wobei die Leitung (14) auf das erste (121) und das zweite (122) Heizelement in einem sanduhrförmigen Wickelverlauf aufgewickelt sind.

4. Fluidwärmer (10) nach einem der vorstehenden Ansprüche, der einen gabelförmigen Heizkern (12) mit zwei Zinken beinhaltet, die das erste (121) und das zweite (122) Heizelement und einen Schleifenabschnitt (123) zwischen den Zinken (121, 122) bereitstellen.

5. Fluidwärmer (10) nach Anspruch 4, der ein Abstandselement (16) zwischen dem Schleifenabschnitt (123) des Heizkerns (12) und den Sätzen von Wickelschleifen (141, 142) der Leitung (14) beinhaltet.

6. Fluidwärmer (10) nach Anspruch 1, wobei die Zentrierelemente (181, 182) mindestens einen kanalförmigen Körper (181a, 182a) beinhalten, der ein jeweiliges des ersten (121) und des zweiten (122) Heizelements und mindestens eine Längsrippe (181b, 181c; 182b, 182c), die von dem kanalförmigen Körper (181a, 182a) des kanalförmigen Körpers (181a, 182a) radial vorragt, umschließt.

7. Fluidwärmer (10) nach Anspruch 6, wobei der Satz erster Wickelschleifen (141) und der Satz zweiter Wickelschleifen (142) einander zugewandte höckerförmige Bereiche (141a, 142a) beinhalten, wobei die mindestens eine Längsrippe (181c, 182c) längs in die höckerförmigen Bereiche (141a, 142a) einfügbar sind.

8. Fluidwärmer (10) nach Anspruch 6 oder Anspruch 7,
wobei die mindestens eine Längsrippe (181c, 182c) einen Satz von Kerben (181d, 182d) beinhaltet, der Durchgänge für die Wickelschleifen (141, 142) der Leitung (14) beinhaltet.

9. Fluidwärmer (10) nach einem der vorstehenden Ansprüche, der Wärme leitendes Material (20) beinhaltet, das auf die Heizelemente (121, 122) und die Wickelschleifen (141, 142) der Leitung (14), die auf die Heizelemente (122, 122) gewickelt sind, aufgebracht ist.

10. Fluidwärmer (10) nach Anspruch 9, wobei das Wärme leitende Material (20) den Raum zwischen den Heizelementen (121, 122) und den Wickelschleifen (141, 142) der Leitung (14), die auf die Heizelemente (121, 122) gewickelt sind, füllt.

11. Maschine (100), die Folgendes beinhaltet:
- einen Fluidwärmer (10) nach einem der vorstehenden Ansprüche,
- eine Flüssigkeitsquelle (P, T, W) in Flüssigkeitstransferverbindung mit dem Eingangsende (10a) der Leitung (14) des Fluidwärmers (10),
- eine Stromversorgungsquelle (S) zum Bestromen des Heizkerns (12) des Fluidwärmers (10), und
- ein Benutzerelement (B) erwärmten Fluids in Flüssigkeitstransferverbindung mit dem Ausgangsende (10b) der Leitung (14) des Fluidwärmers (10).

12. Maschine (100) nach Anspruch 11, die Folgendes beinhaltet:
- eine Flüssigkeitsquelle (P, T, W) zum Vorbereiten von Getränken in Flüssigkeitstransferverbindung mit dem Eingangsende (10a) der Leitung (14) des Fluidwärmers (10),
- eine Brühkammer (B), die mit einem Getränkevorläufer beladbar ist, wobei die Brühkammer in Flüssigkeitstransferverbindung mit dem Ausgangsende (10b) der Leitung (14) des Fluidwärmers (10) steht und dazu konfiguriert ist, Getränke (C), die durch Brühen des Vorläufers mittels erhitzten Fluids aus dem Fluidwärmer (10) erhalten werden, abzugeben.

## Revendications

1. Dispositif de chauffage de fluide (10) comprenant :
un noyau chauffant (12) comprenant un premier (121) et un second (122) élément chauffant allongé co-extensif,
un conduit (14) avec une extrémité d'entrée (10a) pour le fluide à chauffer et une extrémité de sortie (10b) pour le fluide chauffé, le conduit (14) étant enroulé sur les éléments chauffants (121, 122) selon un motif d'enroulement comprenant un ensemble de premières boucles d'enroulement (141) enroulées autour du premier élément chauffant (121) et un ensemble de secondes boucles d'enroulement (142) enroulées autour du second élément chauffant (122), les premières boucles d'enroulement (141) étant entrelacées avec les secondes boucles d'enroulement (142),
**caractérisé en ce que** le dispositif de chauffage de fluide (10) comprend des éléments de centrage (181, 182) entre les premières boucles d'enroulement (141) et le premier élément chauffant (121) et entre les secondes boucles d'enroulement (142) et le second élément chauffant (122).

2. Dispositif de chauffage de fluide (10) selon la revendication 1, dans lequel :
les premières boucles d'enroulement (141) sont enroulées sur le premier élément chauffant (121) dans une première direction d'enroulement, et
les secondes boucles d'enroulement (142) sont enroulées sur le second élément chauffant (122) dans une seconde direction d'enroulement, la seconde direction d'enroulement étant opposée à la première direction d'enroulement.

3. Dispositif de chauffage de fluide (10) selon la revendication 1 ou la revendication 2, dans lequel le conduit (14) est enroulé sur les premier (121) et second (122) éléments chauffants selon une trajectoire d'enroulement en forme de sablier.

4. Dispositif de chauffage de fluide (10) selon l'une quelconque des revendications précédentes, comprenant un noyau chauffant en forme de fourche (12) avec deux dents constituant les premier (121) et second (122) éléments chauffants et une partie de boucle (123) entre les dents (121, 122).

5. Dispositif de chauffage de fluide (10) selon la revendication 4, comprenant un élément d'espacement (16) entre la partie de boucle (123) du noyau chauffant (12) et les ensembles de boucles d'enroulement (141, 142) du conduit (14).

6. Dispositif de chauffage de fluide (10) selon la revendication 1, dans lequel les éléments de centrage (181, 182) comprennent au moins un corps en forme de canal (181a, 182a) qui enveloppe un élément respectif parmi le premier (121) et le second (122) élément chauffant et au moins une ailette longitudinale (181b, 181c ; 182b, 182c) faisant saillie radialement vers l'extérieur du corps en forme de canal (181a, 182a).

7. Dispositif de chauffage de fluide (10) selon la revendication 6, dans lequel l'ensemble de premières boucles d'enroulement (141) et l'ensemble de secondes boucles d'enroulement (142) comprennent des régions en forme de cuspide (141a, 142a) se faisant mutuellement face avec la au moins une (181c, 182c) ailette longitudinale qui peut être insérée longitudinalement dans lesdites régions en forme de cuspide (141a, 142a).

8. Dispositif de chauffage de fluide (10) selon la revendication 6 ou la revendication 7, dans lequel la au moins une ailette longitudinale (181c, 182c) comprend un ensemble d'encoches (181d, 182d) fournissant des voies de passage pour les boucles d'enroulement (141, 142) du conduit (14).

9. Dispositif de chauffage de fluide (10) selon l'une quelconque des revendications précédentes, comprenant un matériau thermiquement conducteur (20) appliqué sur les éléments chauffants (121, 122) et les boucles d'enroulement (141, 142) du conduit (14) enroulées sur les éléments chauffants (122, 122).

10. Dispositif de chauffage de fluide (10) selon la revendication 9, dans lequel le matériau thermiquement conducteur (20) remplit l'espace entre les éléments chauffants (121, 122) et les boucles d'enroulement (141, 142) du conduit (14) enroulées sur les éléments chauffants (121, 122).

11. Machine (100) comprenant :
un dispositif de chauffage de fluide (10) selon l'une quelconque des revendications précédentes,
une source de liquide (P, T, W) en communication de transfert de liquide avec l'extrémité d'entrée (10a) du conduit (14) du dispositif de chauffage de fluide (10),
une source d'alimentation (S) pour alimenter le noyau chauffant (12) du dispositif de chauffage de fluide (10), et
un élément utilisateur (B) de fluide chauffé en communication de transfert de fluide avec l'extrémité de sortie (10b) du conduit (14) du dispositif de chauffage de fluide (10).

12. Machine (100) selon la revendication 11, comprenant :
une source (P, T, W) de liquide pour préparer des boissons en communication de transfert de liquide avec l'extrémité d'entrée (10a) du conduit (14) du dispositif de chauffage de fluide (10),
une chambre d'infusion (B) pouvant être chargée avec un précurseur d'une boisson, la chambre d'infusion étant en communication de transfert de fluide avec l'extrémité de sortie (10b) du conduit (14) du dispositif de chauffage de fluide (10) et configurée pour distribuer des boissons (C) obtenues en faisant infuser ledit précurseur au moyen de fluide chauffé provenant du dispositif de chauffage de fluide (10).
